# EUROPEAN PATENT APPLICATION

(11) **EP 4 752 396 A1**
(43) Date of publication of application: **03.06.2026**
(21) Application number: 24216925.8
(22) Date of filing: 02.12.2024
(51) Int. Cl.: F16H 3/089, B60K 1/00, B60K 1/02, F16H 3/54, F16H 37/04, F16H 1/28, F16H 3/08, F16H 61/04

(54) **ELECTRIC AXLE FOR A VEHICLE**

(71) Applicant: Volvo Truck Corporation, 405 08 Göteborg (SE)
(72) Inventor: NORBERG, Sven, 422 47 Hisings Backa (SE)
(74) Representative: Ex Materia

(57) **Abstract**

The invention concerns an electric axle comprising a housing, and, at least partly disposed inside the housing :
- an electric motor (10) configured to deliver a first torque on a motor shaft (11) ;
- a shiftable reduction gear assembly (330) comprising at least a first gearwheel (331) and a second gearwheel (335) coaxial with, and rotationally connectable to the motor shaft (11) ;
- a planetary set (200) comprising two coaxial planetary gearsets, at least one member of the planetary set (200) being drivingly connected or connectable to the shiftable reduction gear assembly (330) ;
- at least one driveshaft (90) configured to be drivingly connected to a wheel of the vehicle, the at least one driveshaft (90) being coaxial with, and receiving power from the planetary set (200).

## Description

### TECHNICAL FIELD

The invention relates in general to an electric powertrain for a vehicle and more particularly to an electric powertrain integrated into a vehicle axle. The invention may find an application in low-duty, medium-duty and heavy-duty road vehicles, such as trucks, busses, or passenger cars.

An axle is one of the key components of the powertrain of a vehicle. The axle extracts energy from the engine or battery and transmits it to the wheels to move the vehicle forward.

An electric powertrain consists of an electric motor, transmission, differential, driveshaft and axle. Within the powertrain, the main roles of the axle are to support the chassis and the overall weight of the vehicle and transfer power to the wheels to propel the vehicle.

Electric axle, also known as "E-axle", is an electric drive solution for battery electric vehicles, fuel cells and hybrid applications. The E-axle is for example a front or a rear axle including a housing configured to receive a powertrain arranged to transfer power and torque from the electric motor to the wheels of the axle to move the vehicle in the desired direction. E-axles draw their power from battery- or fuel cell-powered motors, which use lithium-ion (Li-ion) batteries for example. As E-axles integrate components such as the motor and transmission into one housing assembly, the electric motor, electronics and transmission are therefore combined in a compact unit to drive the wheels. The weight of the assembly is reduced compared with solutions having separate parts.

Typically, vehicles have a front and a rear axle to support four wheels, but larger vehicles, such as trucks, may have more axles to support a larger chassis and a higher number of wheels.

Due to emission regulation requirements, the transport industry moves towards electromobility and uses more and more electric power to drive vehicles. In order to leave space for the batteries, chassis and some other parts, the powertrain of the vehicle should be as compact as possible.

Most electric motors have an ideal operating range that is achieved at high speed and low torque. In some operating conditions, for example for high load starts or hill starts, the torque demand at the wheels is increased. In these cases, a high reduction ratio between the electric motor and the wheels is required. To do so, several reduction stages are placed downstream of the electric motor. This reduction is performed at the cost of available space.

In addition to high torque also high speeds are needed for road vehicles. Therefore, there is a need for a compact electric powertrain with a high maximum reduction ratio and a large range of transmission ratios in order to enable high speed as well as high torque. In this disclosure, reduction refers to speed reduction with a corresponding torque increase.

The proposed invention falls within this context and proposes an electric powertrain comprising at least one motor and a reduction system provided with two planetary gearsets connected in series combined with a gear shift mechanism fitted directly on the motor output shaft.

### GENERAL DEFINITION OF THE INVENTION

To this end, one subject of the invention is an electric axle for a vehicle, the electric axle being configured to provide electric propulsion to the vehicle, characterized in that said electric axle comprises a housing, and, at least partly disposed inside the housing :
- an electric motor configured to deliver a first torque on a motor shaft;
- a shiftable reduction gear assembly comprising at least a first gearwheel and a second gearwheel coaxial with, and rotationally connectable to the motor shaft;
- a planetary set comprising two coaxial planetary gearsets among which:
   ∘ a fixed reduction planetary gearset, and
   ∘ a shiftable planetary gearset,
a member of the fixed reduction planetary gearset being rotationally connected or connectable to at least one member of the shiftable planetary gearset, at least one member of the planetary set being drivingly connected or connectable to the shiftable reduction gear assembly;
- at least one driveshaft configured to be drivingly connected to a wheel of the vehicle, the at least one driveshaft being coaxial with, and receiving power from the planetary set.

By the term "rotationally connected to" is intended "permanently connected for common rotation with". By the term "rotationally connectable to" is intended "selectively connectable for common rotation with". The terms "engaged to" and "engageable to" are used in the same way. Hence, a component which is engaged to a fixed member of the transmission cannot rotate relative to the fixed member.

By a "driving connection" of two rotating parts is herein intended that torque can be transmitted between the parts, and that the rotational speeds of the parts are proportional. When two rotating parts are drivingly connected, torque can be transmitted between the parts. This may be achieved by two gearwheels being in meshing engagement, or by a first gearwheel being in meshing engagement with a second gearwheel, which is in turn in meshing connection with a third gearwheel, or by a first gearwheel being in meshing engagement with a second gearwheel, which is rigidly connected to a third gearwheel, which is in turn in meshing connection with a fourth gearwheel, etc. Thus, in order to be drivingly connected, it is not necessary that two rotating parts are in meshing engagement. It is sufficient that the rotation of one of the parts inevitably leads to the rotation of the other one of the parts. When two parts are drivingly connectable, they are selectively connectable such that torque can be transmitted between the parts.

By a "meshing engagement" is intended a permanent meshing engagement. For example, meshing references primarily to gearwheels and secondly to dog clutches or splines.

The electric axle of the invention proposes a reduction system provided with two planetary gearsets connected in series, combined with a gear shift mechanism fitted directly on the electric motor output shaft. The coaxiality of the two planetary gearsets renders the electric axle of the invention as compact as possible (no intermediate shaft is required), while making it possible to provide a high reduction ratio and a large range of transmission ratios. This leads to the electric axle of the invention being able to provide high speed or high torque as required in different driving situations.

The electric axle according to the invention may further comprise a differential connected between the planetary set and the at least one driveshaft. The differential remedies the problems caused by the fact that when driving in a curve, the wheels on the outside of the directional curve have further to travel than those on the inside. Similarly, even in a straight line, the distance covered by each wheel might vary depending on differences in inflation, wear, ... The role of the differential is to compensate for these differences. More precisely, the differential distributes the torque arriving through the planetary set to the wheels, and at the same time allows them to rotate with different speeds in accordance with the driving situation.

In an optional feature of the invention, the shiftable reduction gear assembly comprises a coupling member mechanically linked to the motor shaft and configured to selectively rotationally connect the motor shaft with one of the first and second gearwheels. As explained before, the coupling member enables to connect the output motor shaft either to the first gearwheel or the second gearwheel. Depending on the diameter of each of the first gearwheel and second gearwheel, the connection of the motor shaft with said gearwheel provides a first reduction directly at the output of the electric motor. With a first gearwheel having a diameter greater than the second gearwheel, the connection of the motor shaft with the first gearwheel leads to a small reduction whereas the connection of the motor shaft with the second gearwheel leads to a large reduction.

In an optional feature of the invention, the shiftable planetary gearset comprises a coupling part, that is to say a coupling mechanism, able to engage a member of the shiftable planetary gearset with a non-rotating member rigidly fixed to the housing. When said member of the shiftable planetary gearset is engaged to the housing or the non-rotating member, it means that this member is locked. Depending on the arrangement of the shiftable planetary gearset, a large variety of reduction can be achieved at the shiftable planetary gearset.

The coupling part, or coupling mechanism, may be configured to rotationally connect two members of the shiftable planetary gearset. Once these two members are connected, and as they connect with a member of the fixed reduction planetary gearset or the shiftable reduction gear set, the shiftable planetary gearset is in direct drive.

In an optional feature of the invention, the shiftable reduction gear assembly comprises a third gearwheel and a fourth gearwheel coaxial with the at least one driveshaft, and rotationally connected or connectable to a member of the planetary set, the third gearwheel meshing with the first gearwheel and the fourth gearwheel meshing with the second gearwheel.

This architecture enables the torque transmission of the electric motor through either the first or second gearwheel. The torque is further transmitted through the associated gearwheel, i.e. the third or fourth gearwheel, to the planetary set. According to the considered embodiment, the third or fourth gearwheel, also coaxial with the members of the planetary set, is drivingly connected to a member of the planetary set. Further to participating to the torque transmission through the electric axle architecture, this arrangement contributes to a compact design with more and/or better spaced gears.

In an optional feature of the invention, the fixed reduction planetary gearset comprises a sun gearwheel and a ring gearwheel, the ring gearwheel being engaged to a non-rotating element and the sun gearwheel being rotationally connected to a member of the shiftable reducing planetary gearset or the third or fourth gearwheel of the shiftable reduction gear assembly.

This arrangement of the fixed planetary gearset gives a large speed reduction, theoretically a ratio of more than two, practically above circa three and extending up to and beyond six.

In an optional feature of the invention, the fixed reduction planetary gearset comprises a sun gearwheel and a ring gearwheel, the sun gearwheel being engaged to a non-rotating element and the ring gearwheel being rotationally connected to a member of the fixed reducing planetary gearset or the third or fourth gearwheel of the shiftable reduction gear assembly.

In this configuration, the fixed reduction planetary gearset performs a small reduction.

This arrangement gives a reduction of less than two, typically between 1.2 and 1.6.

In an optional feature of the invention, the electric motor being a first electric motor, the motor shaft being a first motor shaft, and the shiftable reduction gear assembly being a first shiftable reduction gear assembly, the electric axle further comprises:
- a second electric motor configured to deliver a second torque on a second motor shaft;
- a second shiftable reduction gear assembly comprising at least a fifth gearwheel and a sixth gearwheel coaxial with, and rotationally connectable to the second motor shaft, the fifth gearwheel meshing with the third gearwheel and the sixth gearwheel meshing with the fourth gearwheel.

Thanks to this feature, the electric axle receives power coming from two electric motors. As the gearwheels of the second shiftable reduction gear assembly are meshing with the third and fourth gearwheels of the first shiftable reduction gear assembly, the introduction of the second electric motor is not performed to the detriment of the compactness of the electric axle. On the contrary, the second electric motor is integrated to the transmission associated to the first electric motor via the third and fourth gearwheels, meaning that no other additional parts are required. It results in a compact architecture delivering a large number of gear ratios for one electric motor driving and a large variety of possible gear combinations with two electric motors driving.

The driveshaft therefore receives power delivered by two electric motors. The invention makes it possible to have a powershift transmission that delivers excellent load capability. The invention takes advantage of this architecture either to combine the power provided by both electric motors or to drive only one single electric motor while offering the possibility of a wide range of gears ratios.

Combined with the fact that the two planetary gearsets are coaxial, this leads to a compact layout.

In an optional feature of the invention, the second reduction gear assembly comprises a coupling element mechanically linked to the second motor shaft and configured to selectively rotationally connect the second motor shaft with one of the fifth and sixth gearwheels. The coupling element enables to rotationally connect the second motor shaft either to the fifth gearwheel or the sixth gearwheel. Depending on the diameter of each of the fifth gearwheel and sixth gearwheel, the connection of the motor shaft with said gearwheel provides a first reduction directly at the output of the second electric motor. With a fifth gearwheel having a diameter greater than the sixth gearwheel, the connection of the motor shaft with the fifth gearwheel leads to a small reduction whereas the connection of the motor shaft with the sixth gearwheel leads to a large reduction.

In this embodiment, the architecture of the invention has two shiftable gear stages (or gearsets) for each electric motor, the last one being common to both electric motors. As the common shiftable gear in the solution of the invention is a planetary gearset, it results in a compact assembly presenting a high torque capacity in the close vicinity of the wheels. It can also be used in direct drive in the most commonly used top gears and thus reducing losses. These aspects will be detailed in the description of the figures.

In an embodiment of the invention, the first gearwheel and the fifth gearwheel have different numbers of teeth, and the second gearwheel and the sixth gearwheel have different numbers of teeth.

In another embodiment of the invention, the first gearwheel and the fifth gearwheel have the same numbers of teeth, and the second gearwheel and the sixth gearwheel have the same numbers of teeth.

The diameters of the gearwheels positioned directly at the motor shaft define the first reduction ratio. At constant teeth size, it also means that the numbers of teeth of the gearwheels positioned directly at the motor output shaft define the first reduction ratio. The selection of the first reduction ratio affects that ratio of all gears. The electric axle can thus be tuned to high speed, and low torque, or low speed, and high torque.

This is of particular interest when high reduction ratio between the electric motor and the wheels are required, for example for vehicles doing hill starts or high load starts.

The invention also covers a vehicle, electric or hybrid, comprising such an electric axle.

The proposed electric axle architecture has coupling mechanism(s) enabling a shiftable reduction at the shiftable reduction gear assembly for each electric machine directly on the motor shaft and goes to the shaft package coaxial with the differential in one step. This clever arrangement makes it possible to contain an architecture offering a high reduction ratio and a large range of transmission ratios in a compact layout.

The electric axle of the invention has four gear states for each electric motor. The electric axle of the invention comprises four ratios for each electric motor. When driving both electric motors, the electric axle of the invention combines efficiently the contribution of each electric motor to provide a wider range of vehicle speeds compared to solution of the prior art.

Therefore, the electric axle of the invention responds to the need for a compact electric powertrain with a high maximum reduction ratio and a large range of transmission ratios in order to enable high speed as well as high torque. Thanks to its particular architecture, this is achieved with a low number of gears meshed, thereby limiting power losses, and a low number of gearwheels, thereby reducing the number of parts of the whole assembly and the space occupied of the e-axle.

### BRIEF DESCRIPTION OF THE FIGURES

Further features, details and advantages of the invention will become apparent upon reading the description given with reference to the appended drawings, which are given by way of example in which:
Figure 1 is a perspective view of a truck comprising at least one electric axle according to the invention ;
Figure 2 is a schematic view of a first embodiment of the axle according to the invention ;
Figure 3 is a schematic view of a variant of the first embodiment of the axle according to the invention ;
Figure 4 is a schematic view of a second embodiment of the axle according to the invention ;
Figures 5 to 8 are schematic views of the axle according to the invention, in four different configurations of operation ;
Figure 9 is a schematic view of a third embodiment of the axle according to the invention.

### DETAILED DESCRIPTION OF THE INVENTION

The characteristics, variants and various embodiments of the invention, as they have been described or as they will be presented in the detailed description which follows, can be associated with each other, according to various combinations, to the extent that they are not incompatible or exclusive with respect to each other. In particular, it will be possible to imagine variants of the invention comprising only a selection of characteristics described subsequently isolated from the other characteristics described, if this selection of characteristics is sufficient to confer a technical advantage and/or to differentiate the invention compared to the prior art.

For the sake of clarity, the same elements are designated by the same references in the different figures.

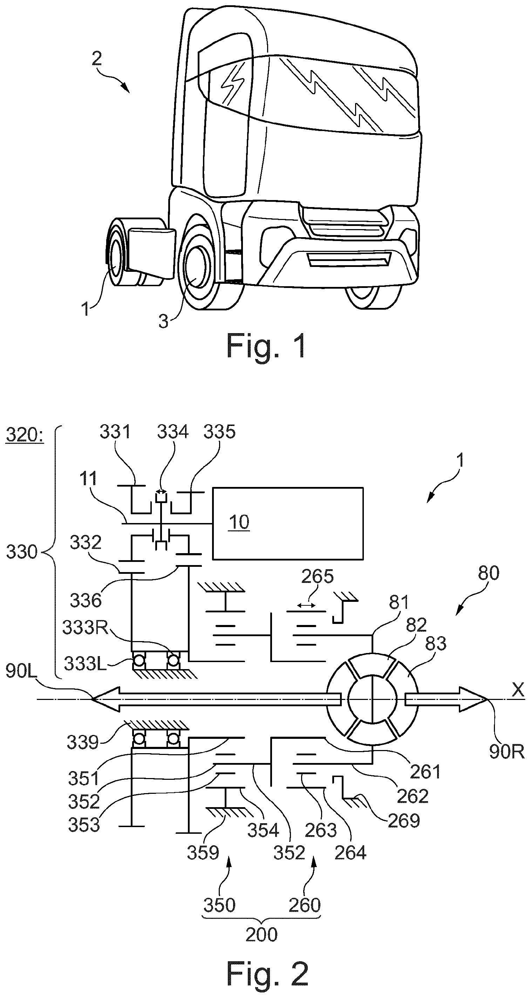

Figure 1 is a perspective view of a truck 2 comprising two axles 1, 3, respectively a rear axle 1 and a front axle 3. In an alternative embodiment, the truck 2 may comprise one or more additional axle(s).

At least one of the two axles is motorized, i.e. comprises at least one electric motor. In the example depicted in Figure 1, it is considered that only the rear axle 1 is motorized. Nevertheless, the invention also applies to a truck in which the front axle is motorized.

The invention covers the electric axle 1. The electric axle 1 is therefore configured to provide electric propulsion to the vehicle 2.

The electric axle 1 extends according to an elongated body, which is also called an axle housing. The axle housing is hollow and comprises a central part inside which a differential is lodged and two lateral parts extending on either side of the central part. The two lateral parts receive the two output shafts intended to be connected to the wheels of the axle.

It is also known that the electric motor(s) are attached to the axle housing by appropriate fastening means, for example bolts and screws. In some embodiments, the housing of the electric motor(s) may also be integrated into the axle housing, thereby leading to a single piece.

Figure 2 is a schematic view of a first embodiment of the axle 1 according to the invention. The electric axle 1 of the invention comprises a housing, and, at least partly disposed inside the housing an electric motor 10 configured to deliver a first torque on a motor shaft 11. The electric motor 10 may be AC type motor, synchronous or asynchronous. Alternatively, the electric motor 10 may be DC type motor (brushed or brushless). More generally, in the scope of the invention, any electric motor is suitable for equipping the electric axle 1.

The electric axle 1 comprises a shiftable reduction gear assembly 330 comprising at least a first gearwheel 331 and a second gearwheel 335 coaxial with, and rotationally connectable to the motor shaft 11. One of the first gearwheel 331 and the second gearwheel 335 can be rotationally connected to the motor shaft 11. Once connected to the motor shaft 11, the gearwheel rotates with the same angular speed as the angular speed of the motor shaft 11 around the axis of the motor shaft 11.

The electric axle 1 further comprises a planetary set 200 comprising two coaxial planetary gearsets among which a fixed reduction planetary gearset 350 and a shiftable planetary gearset 260. A member of the fixed reduction planetary gearset 350 is rotationally connected or connectable to at least one member of the shiftable planetary gearset 260. And at least one member of the planetary set 200 is drivingly connected or connectable to the shiftable reduction gear assembly 330. In other words, either a member of the fixed reduction planetary gearset 350 or a member of the shiftable planetary gearset 260 is drivingly connected to the shiftable reduction gear assembly 330. The other planetary gearset with no member connected to the shiftable reduction gear assembly 330 has at least one member that is rotationally connected to a member of the one planetary gearset that has a member that is connected to the shiftable reduction gear assembly 330.

It can be noted that the rotational connection between members of the two gearsets means that when the input member of the first of the two gearsets rotates the output member of the second of the two gearsets also rotates with a speed that is proportional to the speed of the input member of the first gearset (if the coupling part 265 is connected, i.e. not in neutral). In the present invention, the axis of rotation of the members of the second gearset is coaxial to the axis of rotation of the members of the first gearset.

In the embodiment illustrated in Figure 2, a member of the fixed reduction planetary gearset 350 is drivingly connected to the shiftable reduction gear assembly 330 and the shiftable planetary gearset 260 is coaxial with, and the output member of the fixed reduction planetary gearset 350 is rotationally connected to a member of the shiftable planetary gearset 260. In other words, in this embodiment, the shiftable planetary gearset 260 is downstream of the fixed reduction planetary gearset 350.

The electric axle 1 further comprises at least one driveshaft 90 configured to be drivingly connected to a wheel of the vehicle. The at least one driveshaft 90 is coaxial with the planetary set 200 and receives power from the planetary set 200.

Depending on the configuration of the planetary set 200, the driveshaft 90 is intended to be connected to a member of either the fixed reduction planetary gearset 350 or the shiftable planetary gearset 260.

In the embodiment illustrated in Figure 2, the driveshaft 90 is connected to a member of the shiftable planetary gearset 260. As it will be explained below, this connection might be indirect as an element may be placed in-between.

The e-axle according to the invention proposes a reduction system provided with two serially connected planetary gearsets 350, 260, combined with the shiftable reduction gear assembly 330 fitted directly on the motor shaft 11. This offers a compact layout of the e-axle.

As depicted in Figure 2, the e-axle of the invention advantageously comprises a differential 80 connected between the planetary set 200 and the at least one driveshaft 90. In the embodiment of Figure 2, the differential 80 is connected between the shiftable planetary gearset 260 of the planetary set 200 and the driveshaft 90.

The invention relies on the combination of an electric motor 10, a transmission 320, a differential 80 and a driveshaft 90 configured to receive power from the upstream stages, that is to say from the electric motor 10 through the transmission 320 (including the shiftable reduction gear assembly 330 and the planetary set 200).

The fixed reduction planetary gearset 350 comprises a sun gearwheel 351, a planet carrier 352, a plurality of planet gearwheels 353 and a ring gearwheel 354.

The shiftable planetary gearset 260 comprises a sun gearwheel 261, a planet carrier 262, a plurality of planet gearwheels 263 and a ring gearwheel 264.

The differential 80 comprises a differential planet carrier 81, a plurality of differential planet gearwheels 82, a plurality of differential output gearwheels 83 (that is to say two differential output gearwheels 83).

In the embodiment of Figure 2, the member of the planetary set 200 being drivingly connected to the shiftable reduction gear assembly 330 is the sun gearwheel 351 of the fixed reduction planetary gearset 350. In this configuration, the ring gearwheel 354 of the fixed reduction planetary gearset 350 is engaged to a non-rotating element 359. The non-rotating element 359 is generally the housing of the e-axle.

The connection between the shiftable planetary gearset 260 and the fixed reduction planetary gearset 350 is performed through the planet carrier 352 of the fixed reduction planetary gearset 350 being rotationally connected with the sun gearwheel 261 of the shiftable planetary gearset 260. The connection between the shiftable planetary gearset 260 and the differential 80 is obtained through the rotational connection of the planet carrier 262 of the shiftable planetary gearset 260 with the differential planet carrier 81 of the differential 80. The further connection of the differential 80 to the driveshaft 90 is realized thanks to the meshing of the differential output gearwheels 83 with the differential planet gearwheel 82 which is carried by the differential planet carrier 81. Finally, the differential output gearwheel 83 is rotationally connected to the driveshafts linked to the wheels of the vehicle, and more precisely to the left wheel (90L) and to the right wheel (90R).

The reduction gear assembly 330 comprises a coupling member 334 mechanically linked to the motor shaft 11 and configured to selectively rotationally connect the motor shaft 11 with one of the first and second gearwheels 331, 335. The coupling member 334 may represent any clutch mechanism, such as a clutch sleeve, able to rotationally connect a gearwheel to a shaft.

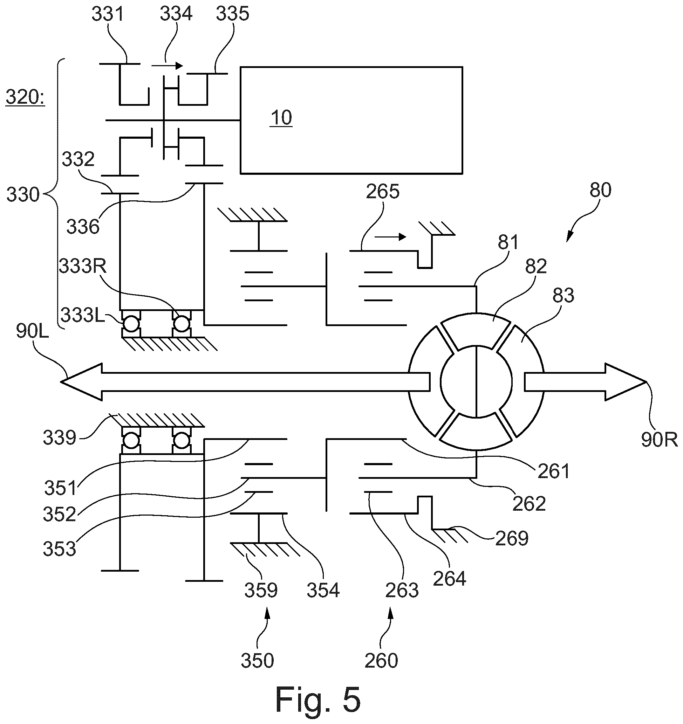

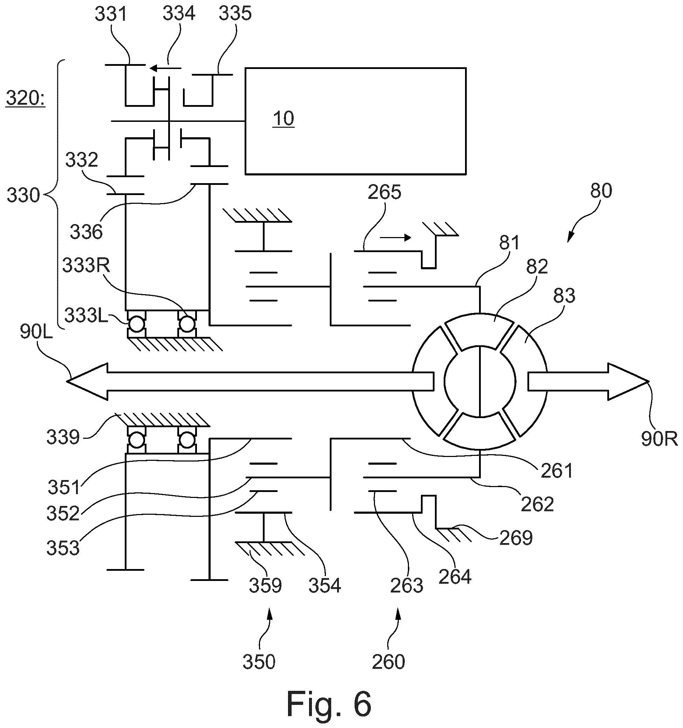

The coupling member 334 enables the rotation of the motor shaft 11 to be transmitted either to the first gearwheel 331 or the second gearwheel 335. In the embodiment shown, the coupling member 334 includes a ring rotationally coupled with the motor shaft 11. This ring is movable in translation along the motor shaft 11 between a first position, visible in Figure 6 in which it is rotationally connected with the first gearwheel 331 and a second position, visible in Figure 5, in which it is rotationally connected with the second gearwheel 335. The coupling member 334 may also take a third position in which it is connected to none of the gearwheels.

The first gearwheel 331 and the second gearwheel 335 have different diameters. In the embodiment shown in Figure 2, the first gearwheel 331 has a larger diameter than the diameter of the second gearwheel 335. By selectively rotationally connecting the motor shaft 11 to either the first gearwheel 331 or the second gearwheel 335 respectively, it makes it possible to proceed with a small or large primary reduction respectively.

The shiftable planetary gearset 260 comprises a coupling part 265 able to selectively rotationally connect a member of the shiftable planetary gearset 260 with a non-rotating member 269 rigidly fixed to the housing of the e-axle. As depicted in the figure, the coupling part 265 is the ring gearwheel 264 that moves laterally. The invention also covers the case of a coupling part 265 being an additional coupling mechanism, similarly to the coupling member 334. The member of the shiftable planetary gearset 260 that can be rotationally connected with the non-rotating member 269 is the ring gearwheel 264. The coupling part 265 may be any clutch mechanism able to rotationally connect a gearwheel to a fixed part. When the coupling part 265 engages the ring gearwheel 264 to the non-rotating member 269 (visible in Figure 6), it results in the locking of the ring gearwheel 264 of the shiftable planetary gearset 260, thereby leading to a large reduction from the shiftable planetary gearset 260.

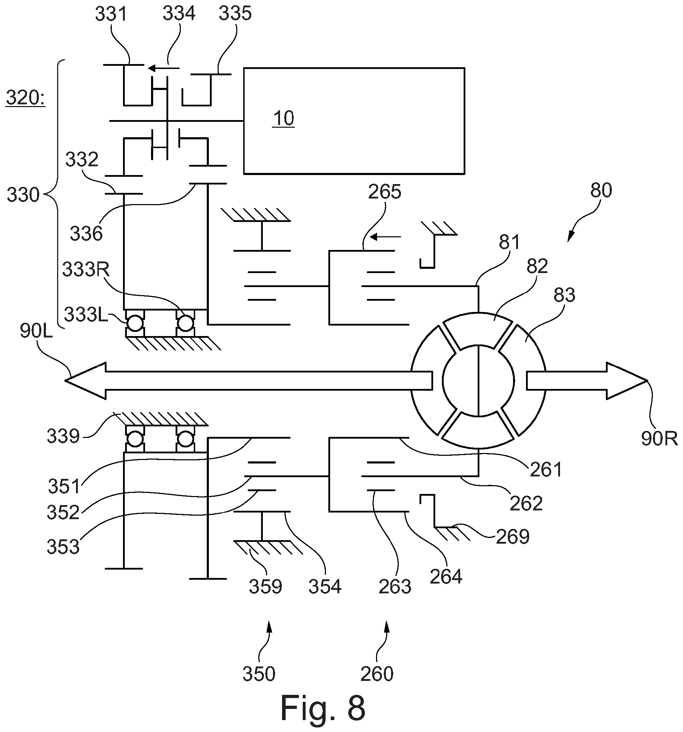

The coupling part 265 is also configured to selectively rotationally connect two members of the shiftable planetary gearset 260. These two members are the ring gearwheel 264 and the sun gearwheel 261. When the coupling part 265 rotationally connects the ring gearwheel 264 and the sun gearwheel 261 (visible in Figure 8), it results in the fact that the ring gearwheel 264 of the shiftable planetary gearset 260 is driven. Indeed, the coupling part 265 connects the ring gearwheel 264 to the input of the shiftable planetary gearset 260. This implies that the speed at the output of the fixed reduction planetary gearset 350 is equal to the speed at the output of the shiftable planetary gearset 260. In other words, the output of the fixed reduction planetary gearset 350 is the input to the shiftable planetary gearset 260. This configuration enables a direct drive of the shiftable planetary gearset 260. In other words, the coupling part 265 is able to give a direct gear for the shiftable planetary gearset 260.

The shiftable reduction gear assembly 330 comprises a third gearwheel 332 and a fourth gearwheel 336 coaxial with the driveshaft 90. The third gearwheel 332 and the fourth gearwheel 336 are rotationally connected (or connectable to) and mounted on bearings 333L 333R, each having a first bearing ring rigidly linked to a non-rotating member 339, for example the housing of the e-axle, and a second bearing ring having a rotational degree of freedom around the driveshaft 90.

The third gearwheel 332 meshes with the first gearwheel 331 and the fourth gearwheel 336 meshes with the second gearwheel 335.

As shown in Figure 2, the third gearwheel 332 and the fourth gearwheel 336 have different diameters. As the third gearwheel 332 and the fourth gearwheel 336, coaxial with the driveshaft, respectively mesh with the first gearwheel 331 and the second gearwheel 335, coaxial with the motor shaft 11, the diameter of the third gearwheel 332 and the fourth gearwheel 336 is conditioned by the diameter of the first gearwheel 331 and the second gearwheel 335. In other words, the diameter of each of the third gearwheel 332 and the fourth gearwheel 336 is depending on the diameter of the first gearwheel 331 and the second gearwheel 335 respectively.

The third gearwheel 332 and the fourth gearwheel 336 rotationally connect to a member of the planetary set 200. In the embodiment depicted in Figure 2, the third gearwheel 332 and the fourth gearwheel 336 rotationally connect to the sun gearwheel 351 of the fixed reduction planetary gearset 350.

When the coupling member 334 rotationally connects the motor shaft 11 with the first gearwheel 331, the first gearwheel 331 rotates at the same angular speed as the motor shaft 11. As the third gearwheel 332 meshes with the first gearwheel 331, the third gearwheel 332 is driven around its axis of rotation. This rotational movement is transmitted to a member of the fixed reduction planetary gearset 350. Further downstream, the movement of the shiftable planetary gearset 260 is depending on the position of the coupling part 265.

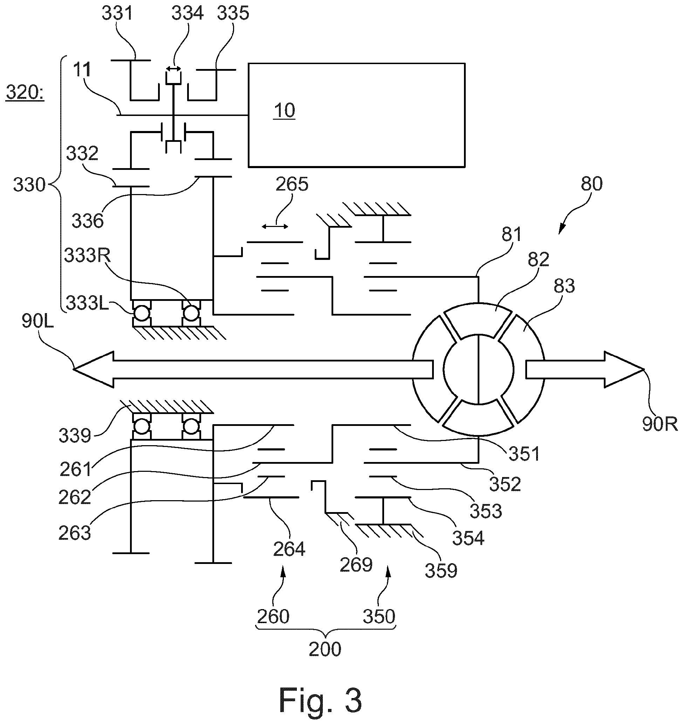

Figure 3 is a schematic view of a variant of the first embodiment of the axle according to the invention. The architecture of this variant is almost identical to the architecture of the first embodiment presented in Figure 2. The difference between the two variants lays in the relative position of the fixed reduction planetary gearset 350 and the shiftable planetary gearset 260 within the planetary set 200. In the first embodiment presented in Figure 2, a member of the fixed reduction planetary gearset 350 is rotationally connected to the shiftable reduction gear assembly 330 and the input of the shiftable planetary gearset 260 is connected to a member of the fixed reduction planetary gearset 350. The shiftable planetary gearset 260 is downstream of the fixed reduction planetary gearset 350.

In the variant of the first embodiment presented in Figure 3, the fixed reduction planetary gearset 350 is downstream of the shiftable planetary gearset 260. A member of the shiftable planetary gearset 260 is rotationally connected to a member of the shiftable reduction gear assembly 330. In this configuration, the third gearwheel 332 and the fourth gearwheel 336 are rotationally connected to the sun gearwheel 261 and rotationally connectable to the ring gearwheel 264 of the shiftable planetary gearset 260. The planet carrier 262 of the shiftable planetary gearset 260 is rotationally connected downstream to the sun gearwheel 351 of the fixed reduction planetary gearset 350.

Having the fixed reduction planetary gearset 350 downstream of the shiftable planetary gearset 260 implies that less torque is needed to be handled by the clutches. Nevertheless the planetary gearset that is used all the time is the one that sees the highest loads on the low gears. Therefore it should be able to deal with both high torque when the first is reducing and also high speed and much usage when the first one is in direct gear.

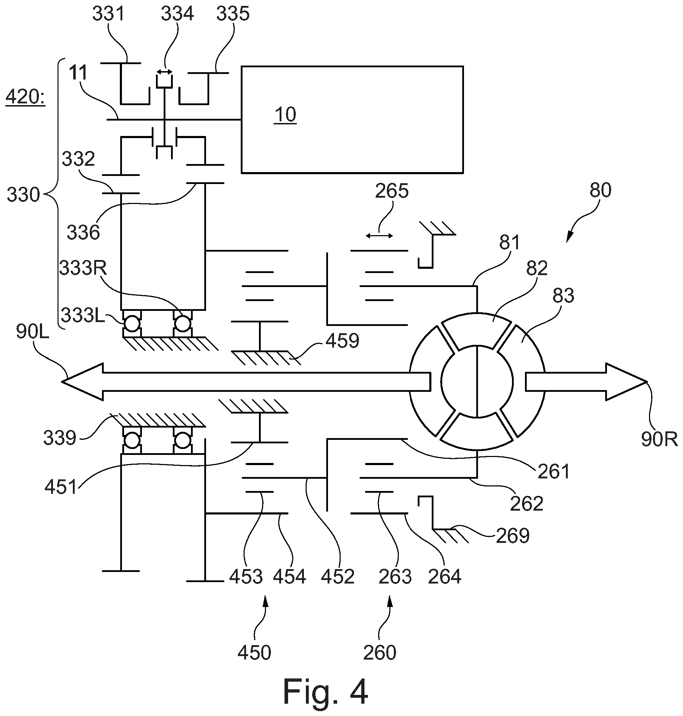

Figure 4 is a schematic view of a second embodiment of the axle according to the invention. The second embodiment is almost identical to the first embodiment presented in Figure 2. The only difference lays in the structure of the fixed reduction planetary gearset (being here referenced as 450). Similarly to the fixed reduction planetary gearset 350 presented before, the fixed reduction planetary gearset 450 comprises a sun gearwheel 451 and a ring gearwheel 454.

In the architecture presented in Figure 4, the sun gearwheel 451 is engaged to a non-rotating element 459, for example the housing of the e-axle, and the ring gearwheel 454 is rotationally connected to a member of the shiftable reduction gear assembly 330, namely the fourth gearwheel 336 as illustrated in Figure 4. This is a direct connection between the ring gearwheel 454 and the fourth gearwheel 336, without any relative rotation between them. This connection may be performed through a spline with play allowing some radial motion.

In this configuration, the fixed reduction planetary gearset 450 is arranged to perform a small reduction. This means that the speed reduction is small, thereby leading to all gears having a faster, i.e. a numerically smaller reduction, speed ratio and providing lower torque.

It is further to be noted that the architecture of the fixed reduction planetary gearset 450 having a sun gearwheel 451 fixedly connected with the non-rotating element 459 can be applied to the architecture of the variant presented in Figure 3 with the fixed reduction planetary gearset 450 being downstream of the shiftable reduction gear assembly 260. In this configuration, the ring gearwheel 454 is drivingly connected to a member of the shiftable reduction gear assembly 260, namely the planet carrier 262. This leads to the same technical effect as the arrangement previously presented.

Figures 5 to 8 are schematic views of the axle according to the invention, in four different configurations of operation. For a better understanding, these four different configurations are based on the first variant of the first embodiment, i.e. the embodiment presented in Figure 2.

As the other embodiments of the electric axle works in the same manner, based on the description of these four different configurations, it can be easily understood by analogy how the electric axle operates based on the second variant of the first embodiment (presented in Figure 3) and on the second embodiment (presented in Figure 4).

Therefore, in the embodiments presented in Figures 5 to 8, the planetary set 200 comprises the following two coaxial planetary gearsets : the fixed reduction planetary gearset 350 and the shiftable planetary gearset 260, the sun gearwheel 351 of the fixed reduction planetary gearset 350 being connected to the shiftable reduction gear assembly 330 and the sun gearwheel 261 of the shiftable planetary gearset 260 being rotationally connected and the ring gearwheel 264 of the shiftable planetary gearset 260 being rotationally connectable to the carrier 352 of the fixed reduction planetary gearset 350, downstream of it. Furthermore, the ring gearwheel 354 of the fixed reduction planetary gearset 350 is engaged to the non-rotating element 359 and the sun gearwheel 351 of the fixed reduction planetary gearset 350 is rotationally connected to the third gearwheel 332 and the fourth gearwheel 336 of the shiftable reduction gear assembly 330.

Figure 5 represents the electric axle in the configuration in which the coupling member 334 rotationally connects the motor shaft 11 with the second gearwheel 335. The second gearwheel 335 is driven. In the illustration, the second gearwheel 335 has a smaller diameter than the first gearwheel 331 has. Therefore, this coupling leads to a large primary reduction.

The coupling part 265 of the shiftable planetary gearset 260 engages the ring gearwheel 264 of the shiftable planetary gearset 260 to the non-rotating member 269 rigidly fixed to the housing. Doing so, the ring gearwheel 264 is locked, we proceed with a large reduction at the shiftable reducing planetary gearset 260.

The combination of a large primary reduction at the output of the electric motor 10 and the large reduction at the shiftable planetary gearset corresponds to a first gear or gear 1.

Figure 6 represents the electric axle in the configuration in which the coupling member 334 rotationally connects the motor shaft 11 with the first gearwheel 331. The first gearwheel 331 is driven. In the illustration, the first gearwheel 331 has a larger diameter than the second gearwheel 335 has. Therefore, this coupling leads to a small primary reduction.

Similarly to the position of the coupling part 265 of the embodiment in Figure 5, the coupling part 265 of the shiftable planetary gearset 260 engages the ring gearwheel 264 of the shiftable planetary gearset 260 to the non-rotating member 269 rigidly fixed to the housing. Doing so, the ring gearwheel 264 is locked, we proceed with a large reduction at the shiftable reducing planetary gearset 260.

The combination of a small primary reduction at the output of the electric motor 10 and the large reduction at the shiftable planetary gearset corresponds to a second gear or gear 2.

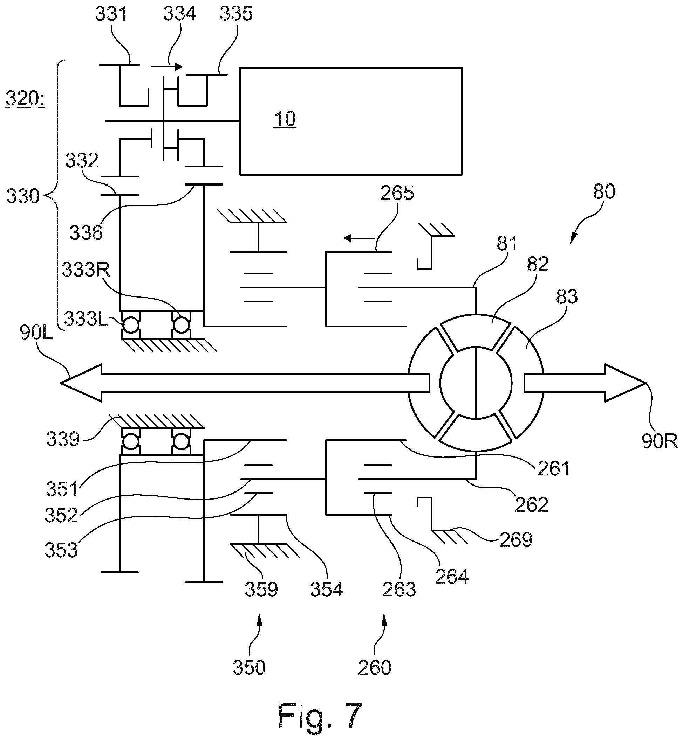

Figure 7 represents the electric axle in the configuration in which the coupling member 334 rotationally connects the motor shaft 11 with the second gearwheel 335. The second gearwheel 335 is driven. As explained before for the embodiment of Figure 5, in the illustration, the second gearwheel 335 has a smaller diameter than the first gearwheel 331 has. Therefore, this coupling leads to a large primary reduction.

The coupling part 265 of the shiftable planetary gearset 260 connects the ring gearwheel 264 of the shiftable planetary gearset 260 with the planet carrier 352 of the fixed reduction planetary gearset 350. Doing so, the ring gearwheel 264 is driven, the invention proceeds with a direct drive of the shiftable planetary gearset 260.

The combination of a large primary reduction at the output of the electric motor 10 and the direct drive of the shiftable planetary gearset corresponds to a third speed or gear 3.

Figure 8 represents the electric axle in the configuration in which the coupling member 334 rotationally connects the motor shaft 11 with the first gearwheel 331. The first gearwheel 331 is driven. As explained before for the embodiment of Figure 6, in the illustration, the first gearwheel 331 has a larger diameter than the second gearwheel 335 has. Therefore, this coupling leads to a small primary reduction.

Similarly to the position of the coupling part 265 of the embodiment in Figure 7, the coupling part 265 of the shiftable planetary gearset 260 connects the ring gearwheel 264 of the shiftable planetary gearset 260 with the planet carrier 352 of the fixed reduction planetary gearset 350. Doing so, the ring gearwheel 264 is driven, the invention proceeds with a direct drive of the shiftable planetary gearset 260.

The combination of a small primary reduction at the output of the electric motor 10 and the direct drive of the shiftable planetary gearset corresponds to a fourth gear or gear 4.

These four different configurations of operation of the electric axle comprising one electric motor 10 can be summarized in the table below:

| Gear | 334 connects with | 265 connects 264 with |
|---|---|---|
| 1 | 335 | 269 |
| 2 | 331 | 269 |
| 3 | 335 | 352 |
| 4 | 331 | 352 |

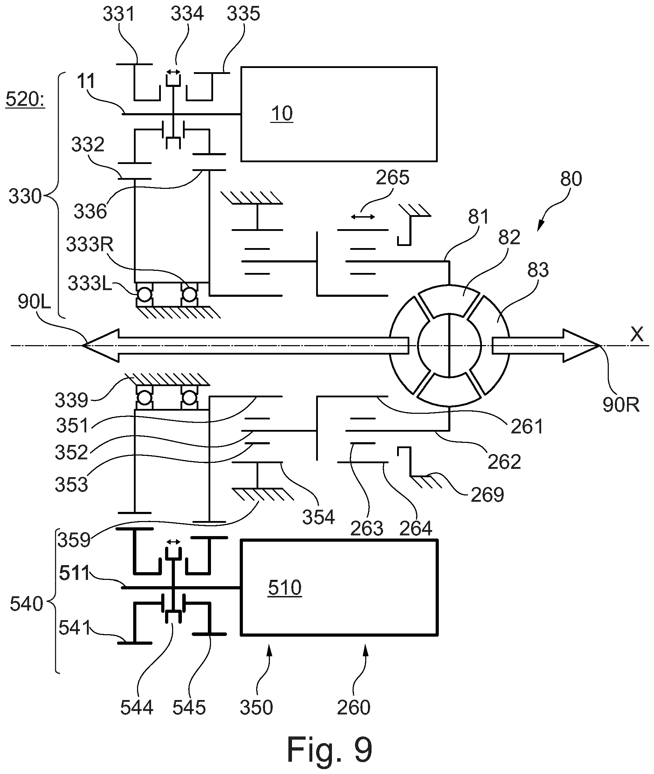

Figure 9 is a schematic view of a third embodiment of the axle according to the invention. The third embodiment comprises the same elements as the embodiments presented previously that comprise a first electric motor 10. Additionally, the electric axle further comprises a second electric motor 510 configured to deliver a second torque on a second motor shaft 511. The electric axle of the third embodiment also comprises a second shiftable reduction gear assembly 540 comprising at least a fifth gearwheel 541 and a sixth gearwheel 545 coaxial with, and rotationally connectable to the second motor shaft 511. The fifth gearwheel 541 meshes with the third gearwheel 332 and the sixth gearwheel 545 meshes with the fourth gearwheel 336. In this embodiment, the second electric motor 510 together with the second shiftable reduction gear assembly 540 are added to the architecture with the first electric motor 10 and the transmission 520. Through the meshing of the fifth and sixth gearwheels 541, 545 respectively with the third and fourth gearwheels 332, 336, the second electric motor 510 is connected to the transmission 520, and the power provided by the second electric motor 510 can be integrated into the transmission 520.

It follows that the first electric motor 10 and the second electric motor 510 are offset from a longitudinal axis X of the electric axle 1.

The electric axle can therefore benefit from the power of two electric motors, in a compact layout as the second electric motor drives on the same gearwheels 332, 336 of the shiftable reduction gearset 330 as the first electric motor. As it will be described below, such an architecture makes it possible to achieve more gear ratios for one electric motor driving and a large variety of possible gear combinations with two electric motors driving.

The second reduction gear assembly 540 comprises a coupling element 544 mechanically linked to the second motor shaft 511 and configured to selectively rotationally connect the second motor shaft 511 with one of the fifth and sixth gearwheels 541, 545.

The coupling element 544 may represent any clutch mechanism, such as a clutch sleeve, able to rotationally connect a gearwheel to a shaft.

Similarly to the coupling member 334 of the first reduction gear assembly 330, the coupling element 544 enables the rotation of the second motor shaft 511 to be transmitted either to the fifth gearwheel 541 or the sixth gearwheel 545. In the embodiment shown, the coupling element 544 includes a ring rotationally coupled with the second motor shaft 511. This ring is movable in translation along the second motor shaft 511 between a first position in which it is rotationally connected with the fifth gearwheel 541 and a second position in which it is rotationally connected with the sixth gearwheel 545. The coupling element 544 may also take a third position in which it is connected to none of the gearwheels 541, 545.

To sum-up, this arrangement offers three options: either the coupling element 544 connects the second motor shaft 511 with the fifth gearwheel 541, in which case the second electric motor 511 provides power to the transmission 520 through the fifth gearwheel 541 and the third gearwheel 332, or the coupling element 544 connects the second motor shaft 511 with the sixth gearwheel 545, in which case the second electric motor 511 provides power to the transmission 520 through the sixth gearwheel 545 and the fourth gearwheel 336, or the coupling element 544 connects none of the gearwheels 541, 545, in which case the second electric motor 511 is not used.

These options add to the various possible gear combinations presented before with the electric axle comprising only the first electric motor 10. Additionally, thanks to the second electric motor 510, it is also possible to consider further gear combinations in which the first electric motor 10 is not driving. It results in even more speed ratios when a single electric motor is driving. The possible combinations based on the architecture of Figure 9 comprising two electric motors is summarized in the table below:

| Gear | 334 connects with | 544 connects with | 265 connects 264 with |
|---|---|---|---|
| 1 | 335 | N | 269 |
| 1+2 | 335 | 545 | 269 |
| 2 | N | 545 | 269 |
| 2+3 | 331 | 545 | 269 |
| 3 | 331 | N | 269 |
| 3+4 | 331 | 541 | 269 |
| 4 | N | 541 | 269 |
| 5 | 335 | N | 352 |
| 5+6 | 335 | 545 | 352 |
| 6 | N | 545 | 352 |
| 6+7 | 331 | 545 | 352 |
| 7 | 331 | N | 352 |
| 7+8 | 331 | 541 | 352 |
| 8 | N | 541 | 352 |
| 1+4 | 335 | 541 | 269 |
| 5+8 | 335 | 541 | 352 |

In this table N means that the coupling member 334 or the coupling element 544 is in a neutral position, that is to say it is connected to none of the corresponding gearwheels.

Based on the gears described in this table, it appears that the first electric motor 10 drives gears 1, 3, 5 and 7, while the second electric motor 510 drives gears 2, 4, 6, 8. The second electric motor 510 drives on the same gearwheels 332, 336 as the first electric motor 10. Thanks to the invention involving the two electric motors 10, 510, gear combinations 1+2, 2+3, 3+4, 5+6, 6+7 and 7+8 are possible and useful. These combinations enable both high speed and high torque due to a high maximum reduction ratio and a wide range of transmission ratios.

In an optional embodiment of the invention, the first gearwheel 331 and the fifth gearwheel 541 have different numbers of teeth, and the second gearwheel 335 and the sixth gearwheel 545 have different numbers of teeth. This makes it possible to consider two electric motors 10, 510 having different ratios.

In another embodiment of the invention, the first gearwheel 331 and the fifth gearwheel 541 have the same numbers of teeth, and the second gearwheel 335 and the sixth gearwheel 545 have the same numbers of teeth (the diameters of the first gearwheel 331 and the fifth gearwheel 541 are different and the diameters of the second gearwheel 335 and the sixth gearwheel 545 are different)).

Adjusting the diameters of the appropriate gearwheels makes it possible to adapt the reduction ratio of the meshing gearwheels. The architecture of the invention can also be adjusted depending on the needs of reduction. This is of particular interest when a high load start or hill start requires a high maximum reduction ratio between the electric motor and the wheels. Further to providing such a high reduction ratio, the e-axle of the invention also reaches a high level of compacity.

Of course, the invention is not limited to the examples which have just been described and numerous adjustments can be made to these examples without departing from the scope of the invention. In particular, the characteristics of different variant embodiments of the invention can be combined to achieve the invention, to the extent that these variants are not incompatible with each other.

## Claims

1. An electric axle (1) for a vehicle, the electric axle (1) being configured to provide electric propulsion to the vehicle, **characterized in that** said electric axle (1) comprises a housing, and, at least partly disposed inside the housing :
- an electric motor (10) configured to deliver a first torque on a motor shaft (11) ;
- a shiftable reduction gear assembly (330) comprising at least a first gearwheel (331) and a second gearwheel (335) coaxial with, and rotationally connectable to the motor shaft (11) ;
- a planetary set (200) comprising two coaxial planetary gearsets among which:
o a fixed reduction planetary gearset (350, 450), and
o a shiftable planetary gearset (260),
a member of the fixed reduction planetary gearset (350, 450) being rotationally connected or connectable to at least one member of the shiftable planetary gearset (260), at least one member of the planetary set (200) being drivingly connected or connectable to the shiftable reduction gear assembly (330);
- at least one driveshaft (90) configured to be drivingly connected to a wheel of the vehicle, the at least one driveshaft (90) being coaxial with, and receiving power from the planetary set (200).

2. The electric axle (1) according to claim 1, comprising a differential (80) connected between the planetary set (200) and the at least one driveshaft (90).

3. The electric axle (1) according to claim 1 or 2, wherein the shiftable reduction gear assembly (330) comprises a coupling member (334) mechanically linked to the motor shaft (11) and configured to selectively rotationally connect the motor shaft (11) with one of the first and second gearwheels (331, 335).

4. The electric axle (1) according to any one of claims 1 to 3, wherein the shiftable planetary gearset (260) comprises a coupling part (265) able to selectively rotationally connect a member of the shiftable planetary gearset (260) with a non-rotating member (269) rigidly fixed to the housing.

5. The electrical axle (1) according to claim 4, wherein the coupling part (265) is configured to connect two members of the shiftable planetary gearset (260).

6. The electric axle (1) according to any one of claims 1 to 5, wherein the shiftable reduction gear assembly (330) comprises a third gearwheel (332) and a fourth gearwheel (336) coaxial with the at least one driveshaft (90), and rotationally connected or connectable to a member (351, 354; 261, 264) of the planetary set (200), the third gearwheel (332) meshing with the first gearwheel (331) and the fourth gearwheel (336) meshing with the second gearwheel (335).

7. The electric axle (1) according to any one of claims 1 to 6, wherein the fixed reduction planetary gearset (350) comprises a sun gearwheel (351) and a ring gearwheel (354), the ring gearwheel (354) being engaged to a non-rotating element (359) and the sun gearwheel being rotationally connected to a member of the shiftable reducing planetary gearset (260) or the shiftable reduction gear assembly (330).

8. The electric axle (1) according to any one of claims 1 to 6, wherein the fixed reduction planetary gearset (450) comprises a sun gearwheel (451) and a ring gearwheel (454), the sun gearwheel (451) being engaged to a non-rotating element (459) and the ring gearwheel (454) being rotationally connected to a member of the fixed reducing planetary gearset (330) or the shiftable reduction gear assembly (260).

9. The electric axle (1) according to any one of claims 1 to 8, the electric motor (10) being a first electric motor, the motor shaft (11) being a first motor shaft (11), and the shiftable reduction gear assembly (330) being a first shiftable reduction gear assembly (330), the electric axle further comprising:
- a second electric motor (510) configured to deliver a second torque on a second motor shaft (511) ;
- a second shiftable reduction gear assembly (540) comprising at least a fifth gearwheel (541) and a sixth gearwheel (545) coaxial with, and rotationally connectable to the second motor shaft (511), the fifth gearwheel (541) meshing with the third gearwheel (332) and the sixth gearwheel (545) meshing with the fourth gearwheel (336).

10. The electric axle (1) according to claim 9, wherein the second reduction gear assembly (540) comprises a coupling element (544) mechanically linked to the second motor shaft (511) and configured to selectively rotationally connect the second motor shaft (511) with one of the fifth and sixth gearwheels (541, 545).

11. The electric axle (1) according to claim 9 or 10, wherein the first gearwheel (331) and the fifth gearwheel (541) have different numbers of teeth, and the second gearwheel (335) and the sixth gearwheel (545) have different numbers of teeth.

12. The electric axle (1) according to claim 9 or 10, wherein the first gearwheel (331) and the fifth gearwheel (541) have the same numbers of teeth, and the second gearwheel (335) and the sixth gearwheel (545) have the same numbers of teeth.

13. A vehicle (2), electric or hybrid, comprising an electric axle (1) according to any one of the claims 1 to 12.
